# EUROPÄISCHE PATENTSCHRIFT

(11) **EP 3 949 092 B1**
(45) Veröffentlichungstag und Bekanntmachung des Hinweises auf die Patenterteilung: **15.03.2023**
(21) Anmeldenummer: 20712330.8
(22) Anmeldetag: 18.03.2020
(51) Int. Cl.: B23K 26/08, B23K 26/32, B23K 37/04, B23K 101/36, B23K 103/12, H02K 15/00, H01R 4/02, H01R 43/02, B23K 37/02

(54) **SCHWEISSMASCHINE, FERTIGUNGSSYSTEM UND VERFAHREN ZUM VERSCHWEISSEN VON FREIEN ENDEN VON STABLEITERN**
WELDING MACHINE, PRODUCTION SYSTEM AND METHOD FOR WELDING FREE ENDS OF BAR CONDUCTORS
MACHINE À SOUDER, SYSTÈME DE FABRICATION ET PROCÉDÉ DE SOUDURE D'EXTRÉMITÉS LIBRES DE BARRES CONDUCTRICES

(30) Priorität: 29.03.2019 DE 102019108351
(43) Veröffentlichungstag der Anmeldung: 09.02.2022
(73) Patentinhaber: FELSOMAT GmbH & Co. KG, 75203 Königsbach-Stein (DE)
(72) Erfinder: PESCHINA, Jürgen, 75438 Knittlingen (DE)
(74) Vertreter: Kohler Schmid Möbus Patentanwälte
(86) Internationale Anmeldenummer: PCT/EP2020/057361
(87) Internationale Veröffentlichungsnummer: WO 2020/200777

(56) Entgegenhaltungen:
- WO-A1-2019/020765
- DE-A1-102015 206 237
- DE-U1-202011 051 331

## Beschreibung

Die Erfindung betrifft eine Schweißmaschine zum Verschweißen von freien Enden von Stableitern eines Stators einer elektrischen Maschine, insbesondere eines Elektromotors. Die Erfindung betrifft ferner ein Fertigungssystem aufweisend eine solche Schweißmaschine. Weiterhin betrifft die Erfindung ein Verfahren zum Verschweißen von freien Enden von Stableitern eines Stators einer elektrischen Maschine, insbesondere eines Elektromotors.

Elektrische Maschinen, z.B. Elektromotoren, weisen verbreitet einen Stator mit einer sogenannten Spulenwicklung auf. Traditionell wird die Spulenwicklung durch Aufwickeln eines Drahtes hergestellt. Solche Wickelverfahren sind jedoch technisch sehr aufwendig und unterliegen technischen Einschränkungen. Zudem ist der Füllungsgrad (Flächenanteil des Drahtes in einem überwickelten Querschnitt) bei gewickelten Spulen begrenzt.

Spulen von Statoren elektrischer Maschinen können alternativ auch durch miteinander verbundene Stableiter, die in einen Grundkörper des Stators eingesteckt sind, ausgebildet sein. Insbesondere im Bereich elektromotorisch antreibbarer (bzw. angetriebener) Kraftfahrzeuge werden zunehmend Elektromotoren mit Statoren mit Stableitern eingesetzt. Um zwei Stableiter miteinander zu verbinden, werden deren freie Enden typischerweise miteinander verschweißt. Beim Verschweißen der freien Enden der Stableiter entstehen jedoch häufig Schweißspritzer, welche den Stator und eine Schweißeinrichtung verunreinigen können.

Aus DE 10 2015 206 237 A1 ist ein System zum Vakuum-Laserschweißen eines wenigstens zweiteiligen Werkstücks bekannt. Das System umfasst das Werkstück oder einen Werkstückträger für das Werkstück, eine Schweißbrillenaufnahme und eine Schweißbrille mit einem Widerlager für das Werkstück und/oder den Werkstückträger. Das Werkstück oder der Werkstückträger kann mittels eines mobilen Tischs unter die Schweißbrillenaufnahme verfahren werden. Die Schweißbrille ist an der Schweißbrillenaufnahme drehbar um eine Drehachse gelagert. Durch die Drehbarkeit der Schweißbrille in der Schweißbrillenaufnahme kann das anliegende Werkstück oder der anliegende Werkstückträger mitsamt der Schweißbrille für das Abfahren einer Schweißnaht am Werkstück gegenüber der Schweißbrillenaufnahme gedreht werden.

WO 2019/02765 A1 beschreibt eine Vorrichtung zum Bearbeiten, insbesondere Verschweißen, von Leitersegmenten eines Wicklungsträgers einer elektrischen Maschine. Eine Spritzschutzvorrichtung bzw. ein Spritzschutzblech sind so angeordnet, dass von einem Schweißvorgang ausgehende Verschmutzungen der umliegenden Endabschnitte der Leitersegmente und/oder einer Bearbeitungseinheit der Vorrichtung zuverlässig verhindert werden, indem die Spritzschutzvorrichtung etwaige Verschmutzungen aufhält.

Aus DE 20 2011 051 331 U1 ist eine Rundtisch-Werkzeugmaschine mit einem Rundtisch mit wenigstens zwei Werkstückpositionen und einer Laserschweißstation. Durch Rotation des Rundtischs können die Werkstückpositionen - und damit die dort gehaltenen Werkstücke - zwischen verschiedenen Stationen der Rundtisch-Werkzeugmaschine verfahren werden. Die Laserschweißstation umfasst eine Schweißeinrichtung, in welche eine Schweißbrillenkassette mit einer Schweißbrille horizontal eingeschoben ist.

### Aufgabe der Erfindung

Der Erfindung liegt die Aufgabe zugrunde, eine Schweißmaschine und ein Schweißverfahren anzugeben, die ein Verschweißen von freien Enden von Stableitern eines Stators einer elektrischen Maschine erlauben, wobei der Stator vor Verschmutzungen geschützt ist.

### Kurze Beschreibung der Erfindung

Diese Aufgabe wird gelöst durch eine Schweißmaschine zum Verschweißen von freien Enden von Stableitern eines Stators einer elektrischen Maschine, insbesondere eines Elektromotors, aufweisend
- eine Trägerstruktur, zum direkten oder indirekten Befestigen des Stators, mit einer öffen- und schließbaren Schweißmaske,
- eine Schweißeinrichtung, insbesondere eine Laserschweißeinrichtung,
wobei die Schweißeinrichtung oberhalb der Trägerstruktur angeordnet ist, und wobei die Trägerstruktur zwischen einer Schweißstellung und einer Beschickungsstellung verbringbar ist, wobei eine erste Seite der Schweißmaske in der Schweißstellung zu der Schweißeinrichtung hin ausgerichtet ist und in der Beschickungsstellung nach unten ausgerichtet ist.

Die Schweißmaschine ist eine Maschine (ein Apparat), die zum Verschweißen der freien Enden von Stableitern eines Stators dient. Der Stator kann direkt (unmittelbar) an der Trägerstruktur befestigt werden. Alternativ kann der Stator indirekt (mittelbar), etwa mittels eines von der Trägerstruktur separaten Halters, an der Trägerstruktur befestigt werden. Mittels des Halters kann der Stator besonders schnell an der Trägerstruktur befestigt und von der Trägerstruktur gelöst werden.

Der Stator ist grundsätzlich so an der Trägerstruktur befestigbar, dass ein Grundkörper, typischerweise umfassend ein Blechpaket, des Stators auf einer (der ersten Seite abgewandten) zweiten Seite der Schweißmaske angeordnet ist. Der Grundkörper wird dann - bei Blick auf die erste Seite - von der Schweißmaske verdeckt, so dass er vor Schweißspritzern geschützt ist. Die Stableiter eines an der Trägerstruktur befestigten Stators ragen durch die Schweißmaske hindurch. Die zu verschweißenden freien Enden der Stableiter sind auf der ersten Seite der Schweißmaske angeordnet.

Die Schweißmaske kann geöffnet und geschlossen werden. Um den Stator an der Trägerstruktur anzuordnen oder von der Trägerstruktur zu entfernen, wird die Schweißmaske grundsätzlich geöffnet. Beim Verschweißen der freien Enden ist die Schweißmaske grundsätzlich geschlossen.

Im geschlossenen Zustand der Schweißmaske sind Zwischenräume zwischen den Stableitern zumindest weitgehend, vorzugsweise vollständig, verschlossen. Evtl. anfallende Schweißspritzer oder sonstige Verschmutzungen können sich daher bei geschlossener Schweißmaske nicht auf jenseits (hinter) der ersten Seite der Schweißmaske angeordneten Teilen, insbesondere auf dem Grundkörper des Stators, ablagern.

Die Schweißmaske weist typischerweise ein radial äußeres, im Wesentlichen kreisringförmiges Deckelement, ein radial inneres, näherungsweise kreisförmiges Deckelement und bewegliche Zwischenelemente auf. Die Zwischenelemente greifen im geschlossenen Zustand zwischen die Stableiter ein. Derart können die Zwischenräume zwischen den Stableitern, sowie die Bereiche radial außerhalb bzw. radial innerhalb der Stableiter mit relativ einfachen mechanischen Mitteln abgedeckt werden.

Zum Verschweißen der freien Enden wird die Trägerstruktur in die Schweißstellung gebracht. In der Schweißstellung weisen die erste Seite der Schweißmaske und die zu verschweißenden freien Enden der Stableiter nach oben. Oberhalb der Trägerstruktur ist die Schweißeinrichtung der Schweißmaschine angeordnet. Die Schweißeinrichtung ist vorzugsweise als eine Laserschweißeinrichtung ausgebildet. Durch Laserschweißen können die freien Enden schnell und präzise verschweißt werden. Da die Schweißeinrichtung sich oberhalb der freien Enden befindet, ist die Gefahr, dass sich Schweißspritzer auf der Schweißeinrichtung, etwa auf einer Optik der Laserschweißeinrichtung, ablagern gering. Die (geschlossene) Schweißmaske verhindert gleichzeitig, dass Schweißspritzer oder sonstige Verschmutzungen zu unterhalb der Schweißmaske befindlichen Teilen, insbesondere zu dem Grundkörper, des Stators durchdringen können.

Zum Entfernen des Stators von der Trägerstruktur nach dem Verschweißen wird die Trägerstruktur in die Beschickungsstellung verbracht. Die Beschickungsstellung kann auch als Beladestellung bezeichnet werden. In der Beschickungsstellung weisen die erste Seite und mithin auch die (verschweißten) Enden der Stableiter nach unten. Um den Stator von der Trägerstruktur zu entfernen, wird die Schweißmaske geöffnet. Da die erste Seite, auf der sich allfällige Schweißspritzer und/oder sonstige Verschmutzungen während des Schweißvorgangs abgelagert haben können, beim Öffnen nach unten weist, wird vermieden, dass Schmutzpartikel auf den Stator fallen können.

Die Stableiter können als sogenannte Hairpins (Haarnadeln) ausgebildet sein, bei denen zwei im Wesentlichen gerade Abschnitte durch einen gebogenen Abschnitt verbunden sind. An jedem der geraden Abschnitte ist dann ein zu verschweißendes freies Ende ausgebildet. Die geraden Abschnitte werden in den Grundkörper des Stators eingesetzt. Alternativ können freie Enden der Stableiter beidseitig des Grundkörpers miteinander verschweißt werden.

Die Stableiter können einen rechteckigen Querschnitt aufweisen. Mit solchen Stableitern kann ein besonders hoher Füllungsgrad des Stators erzielt werden. Die Stableiter erlauben es mit anderen Worten, möglichst viel Leitermaterial (typischerweise Kupfer) in Aussparungen des Grundkörpers des Stators einzubringen. Die Stableiter sind typischerweise in mehreren konzentrischen Ringen (Lagen) angeordnet.

Die Schweißmaschine eignet sich insbesondere zur Fertigung von Statoren für Antriebsmotoren von Kraftfahrzeugen.

Die Schweißmaschine wird vorzugsweise im Rahmen eines unten beschriebenen, erfindungsgemäßen Schweißverfahrens eingesetzt. Insbesondere kann die Schweißmaschine zur Durchführung eines unten beschriebenen, erfindungsgemäßen Verfahrens eingerichtet sein.

### Bevorzugte Ausführungsformen der Erfindung

Bei einer vorteilhaften Ausführungsform ist vorgesehen, dass die Schweißmaske dazu eingerichtet ist, im geschlossenen Zustand die freien Enden der Stableiter einzuklemmen. Dadurch werden die freien Enden fixiert, so dass sie sich beim Verschweißen nicht bewegen können. Die freien Enden können dann besonders präzise verschweißt werden.

Bei einer besonders bevorzugten Ausführungsform ist vorgesehen, dass die Schweißmaske verschiebliche Finger zum Eingreifen zwischen die Stableiter aufweist. Die verschieblichen Finger können zum Schließen der Schweißmaske, typischerweise in radialer Richtung, zwischen die Stableiter eingeschoben werden. Zum Öffnen der Schweißmaske werden die Finger, typischerweise wiederum in radialer Richtung, zurückgezogen. Mittels der Finger kann mit überschaubarem mechanischem Aufwand die erforderliche Abdeckung der Zwischenräume zwischen den Stableitern eingerichtet werden. Ferner können die Finger für ein Einklemmen der Stableiter ausgebildet sein.

Eine ebenfalls besonders bevorzugte Ausführungsform der Schweißmaschine ist dadurch gekennzeichnet, dass die Schweißmaschine weiterhin eine Reinigungseinrichtung zum Reinigen der Schweißmaske, insbesondere der ersten Seite der Schweißmaske, aufweist. Mittels der Reinigungseinrichtung können allfällige Schweißspritzer und/oder sonstige Verschmutzungen von der Schweißmaske und vorzugsweise auch von den verschweißten Enden der Stableiter entfernt werden. Durch das Reinigen der Schweißmaske kann die Gefahr, dass der Stator verschmutzt wird, weiter verringert werden. Zudem kann durch das Reinigen der Schweißmaske vermieden werden, dass Schmutzpartikel zwischen bewegliche Teile der Schweißmaske gelangen und sich dort verklemmen.

Vorzugsweise ist die Reinigungseinrichtung unterhalb der Trägerstruktur angeordnet. Beim Reinigen fallen gelöste Schmutzpartikel, etwa in Form gelöster Schweißspritzer, dann nach unten von der Schweißmaske weg.

Es kann vorgesehen sein, dass die Reinigungseinrichtung für eine Reinigung durch Blasen, Schaben, Bürsten und/oder Strahlen, insbesondere CO2-Schneestrahlen, eingerichtet ist. Es hat sich gezeigt, dass mit diesen Reinigungsverfahren eine schnelle und gründliche Reinigung der Schweißmaske und ggf. der freien Enden der Stableiter erreicht werden kann.

Es kann vorgesehen sein, dass die Schweißmaschine einen Rahmen, insbesondere einen rechteckförmigen Rahmen, aufweist, an dem die Trägerstruktur über eine Schwenkbrücke gelagert ist. Die Schwenkbrücke ermöglicht es, in einfacher Weise die Trägerstruktur zwischen der Schweißstellung und der Beschickungsstellung zu verschwenken. Ferner kann an dem Rahmen die Schweißeinrichtung befestigt sein. Dadurch wird ein kompakter Bau der Maschine befördert. Zudem kann durch den gemeinsamen Rahmen die Präzision der Ausrichtung von Trägerstruktur und Schweißeinrichtung zueinander verbessert werden.

Eine vorteilhafte Ausführungsform der Schweißmaschine ist dadurch gekennzeichnet, dass die Trägerstruktur um eine horizontale Schwenkachse drehbar ist. Durch die horizontale Anordnung der Schwenkachse wird zum Verbringen der Trägerstruktur zwischen der Schweißstellung und der Beschickungsstellung nur wenig Bauraum benötigt. Ferner ist beim Verschwenken der Trägerstruktur um die horizontale Schwenkachse sichergestellt, dass allfällig vorhandene Schmutzpartikel in einem eng begrenzten Bereich von der Schweißmaske herabfallen.

Die Schweißmaschine erlaubt typischerweise eine Relativbewegung zwischen der Schweißeinrichtung und der Trägerstruktur in wenigstens einer, vorzugsweise zwei, horizontalen Richtungen und typischerweise auch in einer vertikalen Richtung. Hierzu können die Schweißeinrichtung und/oder die Trägerstruktur bewegbar sein.

Bei einer Schweißmaschine mit einer horizontalen Schwenkachse für die Trägerstruktur kann weiterhin vorgesehen sein, dass die Trägerstruktur um eine senkrecht zu der Schwenkachse ausgerichtete Drehachse drehbar ist. Durch Drehen um die Drehachse können in einfacher Weise einzelne Paare von zu verschweißenden freien Enden der Stableiter relativ zu der Schweißeinrichtung für den Schweißvorgang ausgerichtet werden. Die Schweißeinrichtung wird dabei zunächst in einer geeigneten Radialposition bezüglich des Stators positioniert. Sodann werden durch Drehen der Trägerstruktur um die Drehachse die Paare von freien Enden von Stableitern zum Verschweißen unterhalb der Schweißeinrichtung angeordnet. Die Drehachse kann sich beim Schwenken der Trägerstruktur um die Schwenkachse mitdrehen. Typischerweise ist die Trägerstruktur innerhalb einer Schwenkbrücke drehbar gelagert.

Eine vorteilhafte Ausführungsform der Schweißmaschine ist dadurch gekennzeichnet, dass die Schweißeinrichtung in einer vertikalen Richtung und wenigstens einer horizontalen Richtung, vorzugsweise zwei horizontalen Richtungen, gegenüber der Trägerstruktur verfahrbar ist. Dadurch kann die Schweißeinrichtung zum Verschweißen der freien Enden auf einfache Weise geeignet positioniert werden. Die Trägerstruktur ist typischerweise in der vertikalen Richtung an einem Rahmen der Schweißmaschine fixiert. Die Trägerstruktur ist meist zudem in horizontaler Richtung gegenüber dem Rahmen unbeweglich. Um die Verfahrbarkeit der Schweißeinrichtung relativ zu der Trägerstruktur einzurichten, ist die Schweißeinrichtung dann entsprechend in der vertikalen und/oder der wenigstens einen horizontalen Richtung verfahrbar.

### Erfindungsgemäßes Fertigungssystem

In den Rahmen der vorliegenden Erfindung fällt ferner ein Fertigungssystem aufweisend eine oben beschriebene, erfindungsgemäße Schweißmaschine und einen Halter, insbesondere Klemmhalter, mittels welchem der Stator an der Trägerstruktur befestigbar ist. Mittels des Halters kann der Stator besonders schnell an der Trägerstruktur befestigt und von der Trägerstruktur gelöst werden. Zur Befestigung an der Trägerstruktur wird der Stator typischerweise in einem in dem Halter gehaltenen Zustand bereitgestellt. Der Halter kann mitsamt dem Stator an der Trägerstruktur befestigt und von der Trägerstruktur entfernt werden. Der Halter kann zudem die Handhabung des Stators im übrigen Verlauf der Fertigung vereinfachen.

Vorzugsweise ist vorgesehen, dass der Halter über ein zentrierendes Spannsystem, insbesondere ein Nullpunktspannsystem, mit der Trägerstruktur verbindbar ist. Auf diese Weise kann der Stator besonders präzise an der Trägerstruktur befestigt werden.

### Erfindungsgemäßes Schweißverfahren

Ebenfalls in den Rahmen der vorliegenden Erfindung fällt ein Verfahren zum Verschweißen von freien Enden von Stableitern eines Stators einer elektrischen Maschine, insbesondere eines Elektromotors, mittels einer Schweißmaschine, die eine Trägerstruktur mit einer öffen- und schließbaren Schweißmaske aufweist. Die Schweißmaschine ist vorzugsweise eine oben beschriebene, erfindungsgemäße Schweißmaschine. Das Verfahren umfasst die Schritte
a) Bereitstellen des an der Trägerstruktur befestigten Stators, wobei eine erste Seite der Schweißmaske und die freien Enden der Stableiter nach oben weisen und wobei die Schweißmaske geschlossen ist,
b) Verschweißen der freien Enden,
c) Wenden der Trägerstruktur, so dass die erste Seite und die Enden der Stableiter nach unten weisen,
d) Öffnen der Schweißmaske und Entfernen des Stators von der Trägerstruktur.

Durch den Schritt a) wird erreicht, dass der Stator und die Schweißmaske sich in einer zum Verschweißen geeigneten Konfiguration befinden. Insbesondere kann die Ausrichtung der Trägerstruktur der oben erwähnten Schweißstellung entsprechen, wobei eine Schweißeinrichtung oberhalb der Trägerstruktur bzw. des Stators angeordnet ist. Zum Befestigen des Stators an der Trägerstruktur kann vorteilhaft ein Halter eines oben beschriebenen, erfindungsgemäßen Fertigungssystems eingesetzt werden. Unmittelbar anschließend an Schritt a) kann im Schritt b) ein Verschweißen der freien Enden erfolgen. Die geschlossene Schweißmaske verhindert dabei, dass sich Schweißspritzer oder sonstige Verschmutzungen auf dem Stator ablagern.

Nach dem Verschweißen der freien Enden wird die Trägerstruktur in Schritt c) gewendet. Die dadurch erzielte Ausrichtung der Trägerstruktur kann insbesondere der oben beschriebenen Beschickungsstellung entsprechen. Beim Öffnen der Schweißmaske mit nach unten weisender erster Seite und nach unten weisenden Enden der Stableiter können keine Schmutzpartikel auf den Stator fallen. Auch falls sich beim Entfernen des Stators von der Trägerstruktur Schmutzpartikel von der Schweißmaske oder den Enden der Stableiter lösen sollten, fallen diese nicht auf den Stator, sondern nach unten vom Stator weg. Der Stator wird im Schritt d) typischerweise nach oben hin von der Trägerstruktur entfernt.

Die elektrische Maschine mit dem Stator kann ein Antriebsmotor zum Antreiben eines, insbesondere (mild-) hybridisierten, Kraftfahrzeugs sein. Die elektrische Maschine kann insbesondere ein Starter-Generator sein. Die elektrische Maschine kann beispielsweise eine Nennleistung von wenigstens 10 kW und höchstens 15 kW, z.B. 12 kW, besitzen.

Vorzugsweise umfasst der Schritt a) die folgenden Teilschritte:
a1) Befestigen des Stators an der Trägerstruktur, wobei die erste Seite der Schweißmaske und die freien Enden der Stableiter nach unten weisen,
a2) Schließen der Schweißmaske,
a3) Wenden der Trägerstruktur, so dass die erste Seite und die freien Enden der Stableiter nach oben weisen.

Indem der Stator bei nach unten weisender erster Seite der Schweißmaske an der Trägerstruktur befestigt wird, wird sichergestellt, dass beim Durchführen der freien Enden der Stableiter durch die Schweißmaske keine möglicherweise an der Schweißmaske verbliebenen Schmutzpartikel auf den Stator fallen. Zudem kann die Trägerstruktur zwischen dem Entfernen eines ersten Stators und dem Befestigten eines zweiten Stators in der Beschickungsstellung verbleiben. Dadurch kann die Fertigung mehrerer Statoren beschleunigt werden.

Durch die Schritte a2) und a3) wird die zum Verschweißen der freien Enden geeignete Konfiguration von Schweißmaske und Trägerstruktur eingerichtet.

Typischerweise erfolgen die Teilschritte a1) bis a3) in der angegebenen Reihenfolge. Der Teilschritt a2) kann alternativ auch zeitlich überlappend mit dem Teilschritt a1) und/oder dem Teilschritt a3) erfolgen. Weiterhin kann der Teilschritt a2) zumindest teilweise, insbesondere vollständig, nach dem Teilschritt a3) erfolgen.

Das Verfahren kann folgenden weiteren Schritt aufweisen:
e) Reinigen der ersten Seite der Schweißmaske, und vorzugsweise auch der Enden der Stableiter, in der in Schritt c) eingerichteten Stellung der Trägerstruktur mit nach unten weisender erster Seite. Mit anderen Worten verbleibt die Trägerstruktur zur Durchführung der Reinigung in der in Schritt c) eingerichteten (Beschickungs-) Stellung. Dadurch wird bewirkt, dass beim Reinigen gelöste Schmutzpartikel von der Schweißmaske und den Enden der Stableiter weg herunterfallen können. Die Reinigung erfolgt vorzugsweise durch Blasen, Schaben, Bürsten und/oder Strahlen, insbesondere CO2-Schneestrahlen.

Wenn nur die erste Seite der Schweißmaske gereinigt wird, kann Schritt e) vor oder, vorzugsweise, nach Schritt d) erfolgen. Wenn auch die Enden der Stableiter gereinigt werden, erfolgt Schritt e) vor Schritt d).

Weitere Vorteile der Erfindung ergeben sich aus der Beschreibung und der Zeichnung. Erfindungsgemäß können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine Schweißmaschine mit einer Trägerstruktur zur Aufnahme eines Stators, die über eine Schwenkbrücke zwischen einer Schweißstellung und einer Beschickungsstellung verschwenkbar ist und die eine öffen- und schließbare Schweißmaske zum Abdecken des Stators aufweist, in einer schematischen Perspektivansicht, wobei sich die Trägerstruktur in der Schweißstellung befindet;
- Fig. 2a: die Schwenkbrücke mit der Trägerstruktur der Schweißmaschine von Fig. 1, in einer freigestellten, schematischen Perspektivansicht;
- Fig. 2b: die Schweißmaske der Trägerstruktur der Schweißmaschine von Fig. 1 im geöffneten Zustand, in einer schematischen Aufsicht;
- Fig. 2c: die Schweißmaske von Fig. 2b im geschlossenen Zustand, in einer schematischen Aufsicht;
- Fig. 2d: einen Stator mit Stableitern, deren freie Enden mittels der Schweißmaschine von Fig.1 verschweißt werden können, in einer schematischen Perspektivansicht;
- Fig. 3: einem schematischen Querschnitt durch die Trägerstruktur der Schweißmaschine von Fig. 1, wobei ein Stator über einen Halter an der Trägerstruktur befestigt ist;
- Fig. 4a: ein Fertigungssystem mit einer Schweißmaschine wie in Fig. 1 und einem Halter, in dem ein Stator mit Stableitern aufgenommen ist, wobei sich eine Trägerstruktur für den Halter in der Beschickungsstellung befindet, so dass der Halter mit dem Stator von oben an der Trägerstruktur befestigt werden kann, in einer schematischen Perspektivansicht;
- Fig. 4b: das Fertigungssystem von Fig. 4a mit an der Trägerstruktur mittels des Halters befestigtem Stator, wobei sich die Trägerstruktur in der Beschickungsstellung befindet, in einer schematischen Perspektivansicht;
- Fig. 4c: das Fertigungssystem von Fig. 4a während des Verbringens der Trägerstruktur in die Schweißstellung, in einer schematischen Perspektivansicht;
- Fig. 4d: das Fertigungssystem von Fig. 4a mit in der Schweißstellung befindlicher Trägerstruktur, in einer schematischen Perspektivansicht;
- Fig. 4e: das Fertigungssystem von Fig. 4a während des Verschweißens von freien Enden von Stableitern des Stators, in einer schematischen Perspektivansicht;
- Fig. 4f: das Fertigungssystem von Fig. 4a während des Verbringens der Trägerstruktur aus der Schweißstellung in die Beschickungsstellung, in einer schematischen Perspektivansicht;
- Fig. 4g: das Fertigungssystem von Fig. 4a mit in der Beschickungsstellung befindlicher Trägerstruktur, wobei eine Reinigungsvorrichtung zur Reinigung der Schweißmaske an diese herangefahren ist, in einer schematischen Perspektivansicht;
- Fig. 4h: das Fertigungssystem von Fig. 4a während des Entfernens des Stators von der Trägerstruktur, die sich in der Beschickungsstellung befindet, in einer schematischen Perspektivansicht;
- Fig. 5: ein Ablaufdiagramm eines Verfahrens zum Verschweißen von freien Enden von Stableitern.

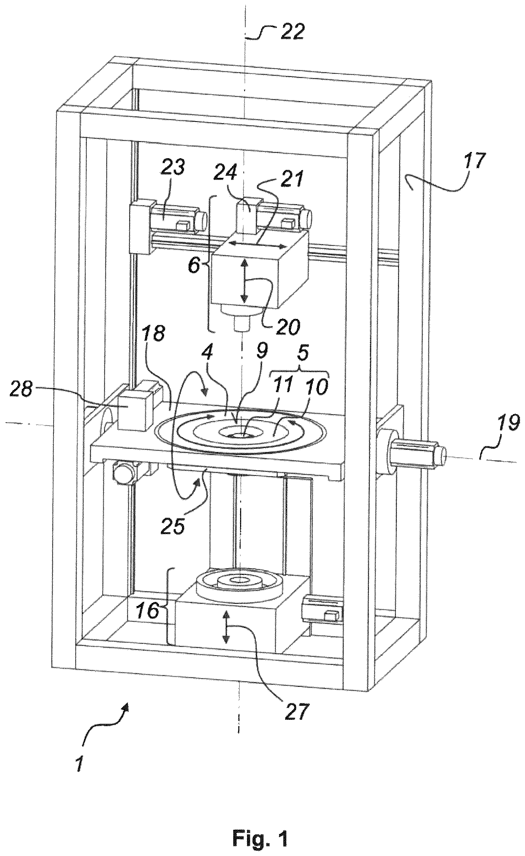

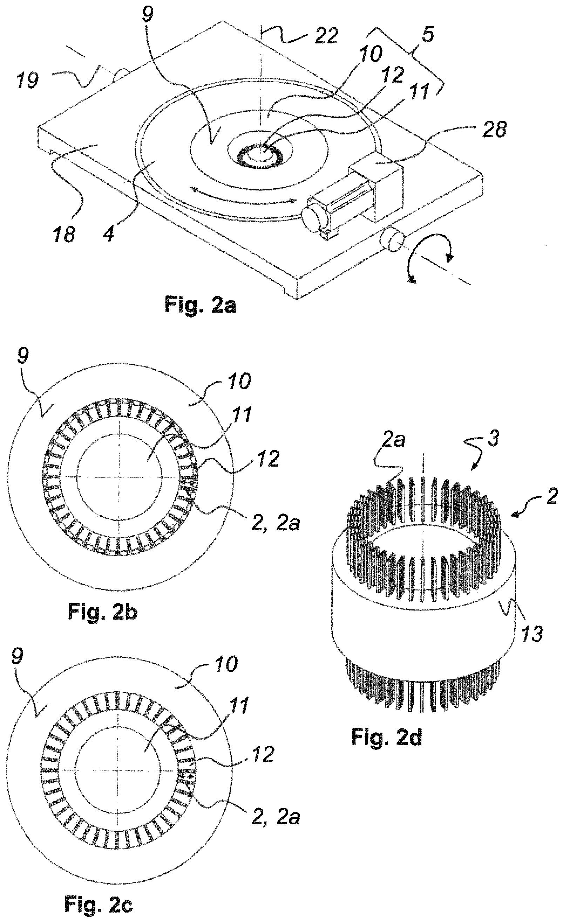

**Figur 1** zeigt eine Schweißmaschine **1.** Die Schweißmaschine 1 dient zum Verschweißen von freien Enden **2a** von Stableitern **2** eines Stators **3,** vgl. **Figur 2d****.** Die Schweißmaschine 1 weist eine Trägerstruktur **4** auf. An der Trägerstruktur 4 ist der Stator 3 befestigbar. Die Trägerstruktur 4 weist eine öffen- und Schließbare Schweißmaske **5** auf.

Die Schweißmaschine 1 weist ferner eine Schweißeinrichtung **6,** hier eine Laserschweißeinrichtung, auf. Die Schweißeinrichtung 6 ist oberhalb der Trägerstruktur 5 angeordnet.

Die Schweißmaschine 1 weist hier einen Rahmen **17** auf. Der Rahmen 17 ist bei Blickrichtung von vorne rechteckförmig ausgebildet. Die Schweißeinrichtung 6 ist gegenüber dem Rahmen 17 in einer vertikalen Richtung **20** und einer horizontalen Richtung **21** verfahrbar. Hierzu sind ein Vertikal-Antrieb **23** für das Verfahren in der vertikalen Richtung 21 und ein Horizontal-Antrieb **24** für das Verfahren in der horizontalen Richtung 21 vorgesehen.

Die Trägerstruktur 4 ist über eine Schwenkbrücke **18** an dem Rahmen 17 gelagert. Die Schwenkbrücke 18 mitsamt der Trägerstruktur 4 ist um eine horizontal verlaufende Schwenkachse **19** gegenüber dem Rahmen 17 drehbar. Zum Verschwenken der Schwenkbrücke 18 um die Schwenkachse 19 ist ein nicht näher dargestellter Schwenk-Antrieb vorgesehen. Die Trägerstruktur 4 mit der Schweißmaske 5 ist durch Drehen um die horizontale Schwenkachse 19 in eine Schweißstellung und in eine Beschickungsstellung verbringbar. In Figur 1 ist die Schweißstellung gezeigt. In der Schweißstellung weist eine erste Seite **9** der Schweißmaske 5 zu der Schweißeinrichtung 6, d.h. nach oben. Demgegenüber weist die erste Seite 9 der Schweißmaske 5 in der Beschickungsstellung nach unten (nicht in Figur 1 dargestellt). Zum Verbringen der Trägerstruktur 4 zwischen der Schweißstellung und der Beschickungsstellung wird die Trägerstruktur 4 um 180° um die Schwenkachse 19 gedreht.

Die Trägerstruktur 4 ist hier ferner um eine senkrecht zu der Schwenkachse 19 ausgerichtete Drehachse **22** gegenüber der Schwenkbrücke 18 drehbar. In der dargestellten Schweißstellung verläuft die Drehachse 22 vertikal.

Die Schweißmaschine 1 weist hier ferner eine Reinigungseinrichtung **16** auf. Die Reinigungseinrichtung 16 dient zum Reinigen der ersten Seite 9 der Schweißmaske 5 und der Enden 2a der Stableiter 2. Zum Reinigen wird die Trägerstruktur 4 in die Beschickungsstellung verbracht. Die Reinigungseinrichtung 16 ist hier für eine Reinigung durch CO₂-Schneestrahlen eingerichtet. Die Reinigungseinrichtung 16 ist unterhalb der Trägerstruktur 4 angeordnet. Um die Reinigungseinrichtung 16 zum Reinigen an die Schweißmaske 5 annähern zu können, ist die Reinigungseinrichtung 16 in einer vertikalen Richtung **27** zur Trägerstruktur 4 hin verfahrbar. Zum Verschwenken der Schwenkbrücke 18 mit der Trägerstruktur 4 zwischen der Schweißstellung und der Beschickungsstellung wird die Reinigungseinrichtung 16 - wie in Figur 1 dargestellt - nach unten von der Trägerstruktur 4 weg verfahren.

**Figur 2a** zeigt die Schwenkbrücke 18 mit der Trägerstruktur 4. Zum Drehen der Trägerstruktur 4 um die Drehachse 22 ist ein Dreh-Antrieb **28** vorgesehen.

Die Schweißmaske 5 umfasst ein radial äußeres, kreisringförmiges Deckelement **10** und ein radial inneres, kreisförmiges Deckelement **11.** Die Schweißmaske 5 weist ferner bewegliche Zwischenelemente in Form von Fingern **12** auf (in Figur 2a nicht zu sehen, vgl. aber Figuren 2b und 2c). Zum Öffnen bzw. Schließen der Schweißmaske 5 werden die Finger 12 in radialer Richtung nach radial außen zurückgezogen bzw. nach radial innen eingerückt.

In **Figur 2b** ist die Schweißmaske 5 im geöffneten Zustand gezeigt. Die Finger 12 sind nach radial außen zurückgezogen. Hier ragen die Finger 12 geringfügig nach radial innen unter dem radial äußeren Deckelement 10 hervor. Unterhalb der Schweißmaske 5, hier unterhalb der Zeichenebene, ist ein Stator 3 (vgl. Figur 2d) mit Stableitern 2 angeordnet. Die Stableiter 2 erstrecken sich durch den Zwischenraum zwischen dem radial inneren Deckelement 11 und dem radial äußeren Deckelement 10. Die zu verschweißenden, freien Enden 2a der Stableiter 2 befinden sich auf der ersten Seite 9 der Schweißmaske 5 (hier oberhalb der Zeichenebene). Im geöffneten Zustand der Schweißmaske 5 kann der Stator 3 an der Trägerstruktur 4 mit der Schweißmaske 5 befestigt oder von dieser entfernt werden.

Die Stableiter 2 sind hier in vier konzentrischen Ringen angeordnet. Man beachte, dass gegenüber der in Figur 2d gezeigten Konfiguration die Stableiter 2 vor dem Verschweißen wechselseitig verbogen werden, so dass jeweils die freien Enden 2a zweier zu verschweißender Stableiter 2 einander angenähert sind (nicht näher dargestellt).

**Figur 2c** zeigt die Schweißmaske 5 im geschlossenen Zustand. Die Finger 12 sind nach radial innen eingerückt. Die Stableiter 2 sind zwischen den Fingern 12 eingeklemmt. Die Finger 12 überdecken jeweils die Bereiche zwischen benachbarten, radial verlaufenden Reihen der freien Enden 2a der Stableiter 2. Im geschlossenen Zustand der Schweißmaske 5 können die freien Enden 2a der Stableiter 2 verschweißt werden. Durch die Deckelemente 10 und 11 sowie die nach innen eingerückten Finger 12 wird dabei verhindert, dass Schweißspritzer oder sonstige Verschmutzungen auf den Stator 3, insbesondere dessen Grundkörper **13** (vgl. Figur 2d), gelangen.

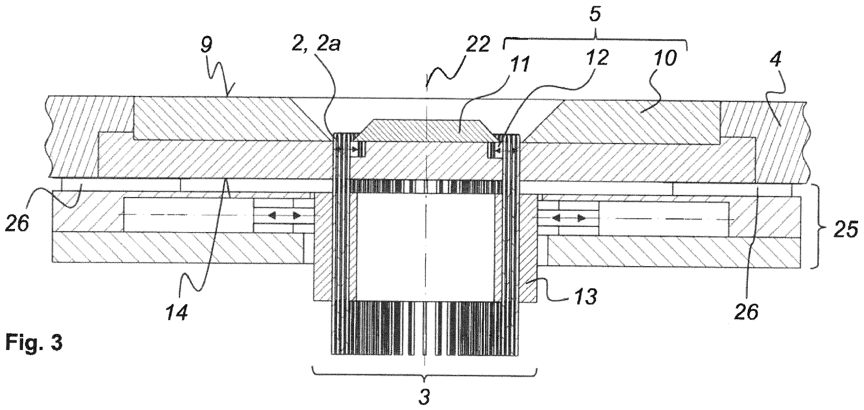

**Figur 3** zeigt einen Querschnitt durch die Trägerstruktur 4 mit der Schweißmaske 5. Der Stator 3 ist mittels eines Halters **25** indirekt an der Trägerstruktur 4 befestigt. Der Halter 25 ist hier als ein Klemmhalter ausgebildet, der den Grundkörper 13 des Stators 3 in radialer Richtung einspannt. Der Halter 25 ist über ein zentrierendes Spannsystem **26,** hier in Form eines Nullpunktspannsystems, an der Trägerstruktur 4 befestigt. Durch das zentrierende Spannsystem 26 kann der Halter 25 mit dem Stator 3 schnell und präzise an der Trägerstruktur 4 festgelegt werden.

Die Schweißmaske 5 befindet sich in Figur 3 im geschlossenen Zustand. Die Finger 12 ragen zwischen den Stableitern 2 durch und untergreifen das radial innere Deckelement 11. Die freien Enden 2a der Stableiter 2 sind von der ersten Seite 9 her zum Verschweißen zugänglich.

Der Grundkörper 13 des Stators 3 ist unterhalb der Schweißmaske 5 auf einer zweiten Seite **14** der Schweißmaske 5 angeordnet. Die zweite Seite 14 ist gegenüberliegend der ersten Seite 9 an der Schweißmaske 5 ausgebildet. Die erste und die zweite Seite 9, 14 weisen in entgegengesetzte Richtungen.

Auch der Halter 25 befindet sich auf der zweiten Seite 14 der Schweißmaske 5. Damit ist auch der Halter 25 beim Verschweißen der freien Enden 2a vor Verschmutzung, etwa durch Schweißspritzer, geschützt.

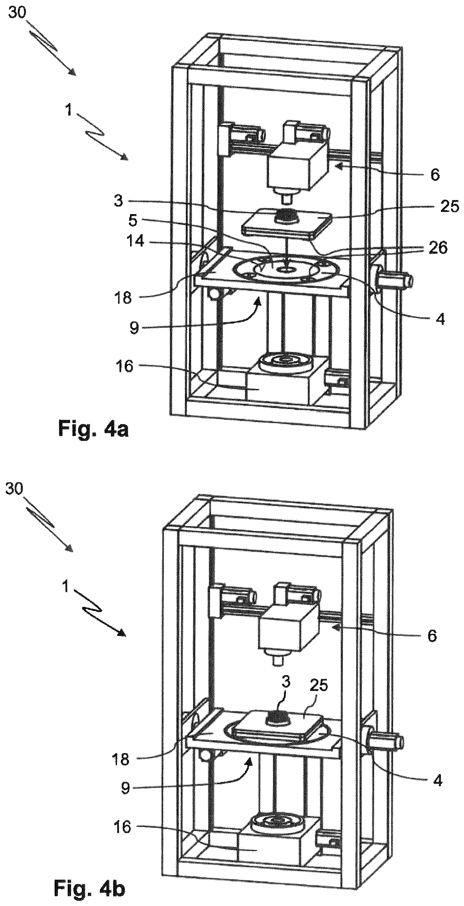

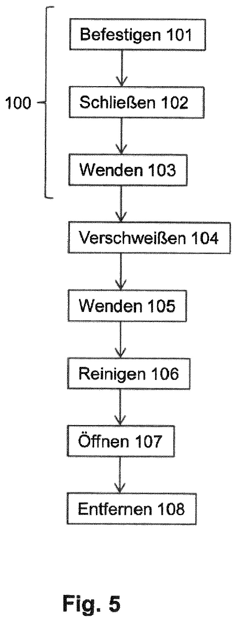

Die **Figuren 4a-4h** zeigen ein Fertigungssystem **30** mit einer Schweißmaschine 1 (vgl. Figur 1) und einem Halter 25 (vgl. Figur 3), an dem ein Stator 3 (vgl. Figur 2d) gehalten ist, zu verschiedenen Zeitpunkten während der Durchführung eines Schweißverfahrens, dessen Ablauf schematisch in **Figur 5** dargestellt ist.

In Figur 4a befindet sich die Trägerstruktur 4 in der Beschickungsstellung, wobei die erste Seite 9 nach unten (zu der Reinigungseinrichtung 16) weist. Während sich die Trägerstruktur 4 in der Beschickungsstellung befindet, wird in einem Schritt **101** der Halter 25 mit dem Stator 3 an der Trägerstruktur 4 mittels des zentrierenden Spannsystems 26 befestigt. Die freien Enden 2a der Stableiter 2 (vgl. Figur 2d) weisen dabei ebenfalls nach unten. Der Halter 25 wird auf der zweiten Seite 14 der Schweißmaske 5 angeordnet. Beim Befestigen des Stators 3 an der Trägerstruktur 4 ist die Schweißmaske 5 geöffnet.

Das Fertigungssystem 30 mit an der Trägerstruktur 4 mittelbar über den Halter 25 befestigtem Stator 3 ist in Figur 4b gezeigt. Nun kann in einem Schritt **102** die Schweißmaske 5 geschlossen werden. Die Trägerstruktur 4 befindet sich dabei noch immer in der Beschickungsstellung.

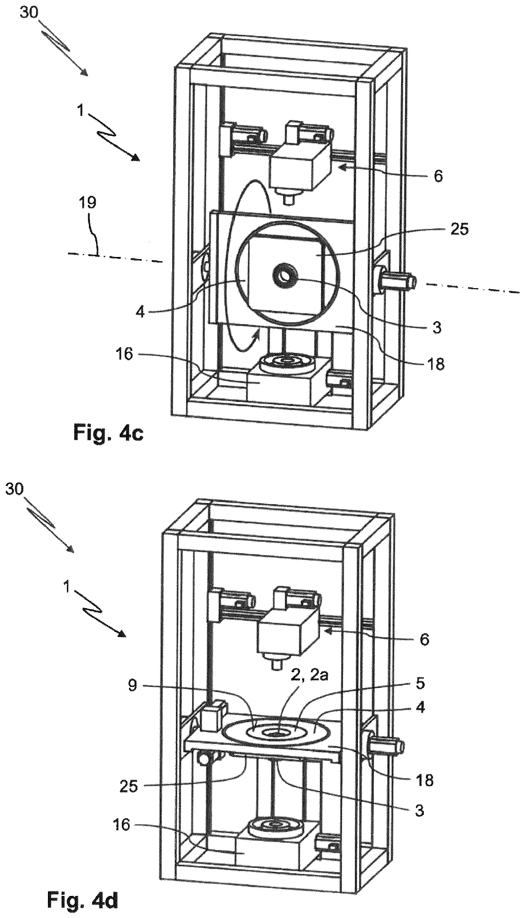

Sodann wird in einem Schritt 103 die Trägerstruktur 4 gewendet. Hierzu wird die Schwenkbrücke 18 um die horizontale Schwenkachse 19 gedreht. Dies ist in Figur 4c dargestellt. Nach Abschluss des Schrittes 103 befindet sich die Trägerstruktur 4, wie in Figur 4d gezeigt ist, in der Schweißstellung. Die erste Seite 9 der Trägerstruktur 4 und die freien Enden 2a der Stableiter 2 weisen nun nach oben zu der Schweißeinrichtung 6.

Die Schritte 101, 102 und 103 bewirken zusammen als ein Gesamtschritt **100,** dass der Stator 3 an der Trägerstruktur 4 befestigt bereitgestellt wird, wobei die freien Enden 2a der Stableiter 2 und die erste Seite 9 der Trägerstruktur 4 nach oben weisen, und wobei die Schweißmaske 5 geschlossen ist.

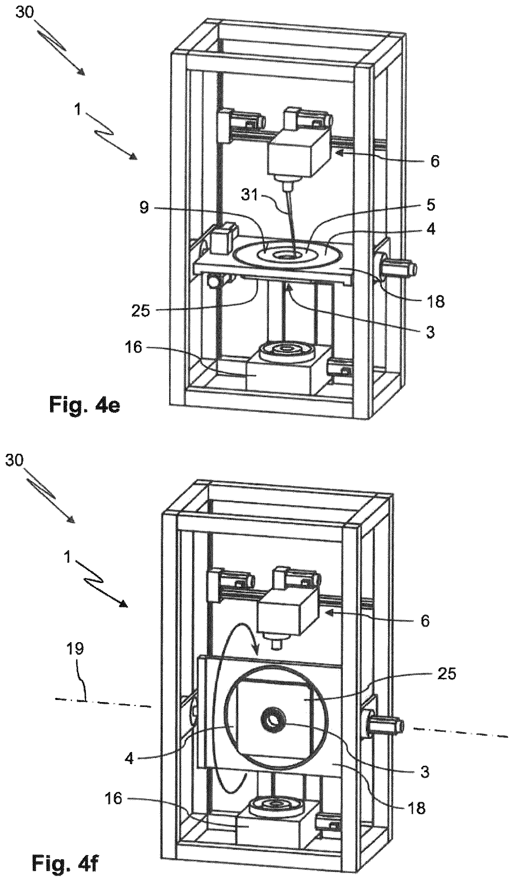

Sodann erfolgt in einem Schritt **104** ein Verschweißen der freien Enden 2a der Stableiter 2. Dies ist in Figur 4e durch einen stark abstrahiert dargestellten Laserstrahl **31** angedeutet, der von der als Laserschweißeinrichtung ausgebildeten Schweißeinrichtung 6 ausgesendet wird. Der Laserstrahl 31 ist in der Praxis meist auf die zu verschweißenden freien Enden fokussiert. Man beachte, dass typischerweise die freien Enden 2a jeweils paarweise nacheinander verschweißt werden; dafür kann die Trägerstruktur 4 um eine vertikale Drehachse gedreht werden (nicht näher dargestellt, vgl. Figuren 1 und 2a). Die Trägerstruktur 4 mit dem daran befestigten Stator 3 verbleibt währenddessen in der Schweißstellung.

Nach Abschluss des Verschweißens wird die Trägerstruktur 4 in einem Schritt **105** erneut gewendet, um sie in die Beschickungsstellung zu überführen. Hierzu wird die Schwenkbrücke 18 um die horizontale Schwenkachse 19 gedreht, vgl. Figur 4f.

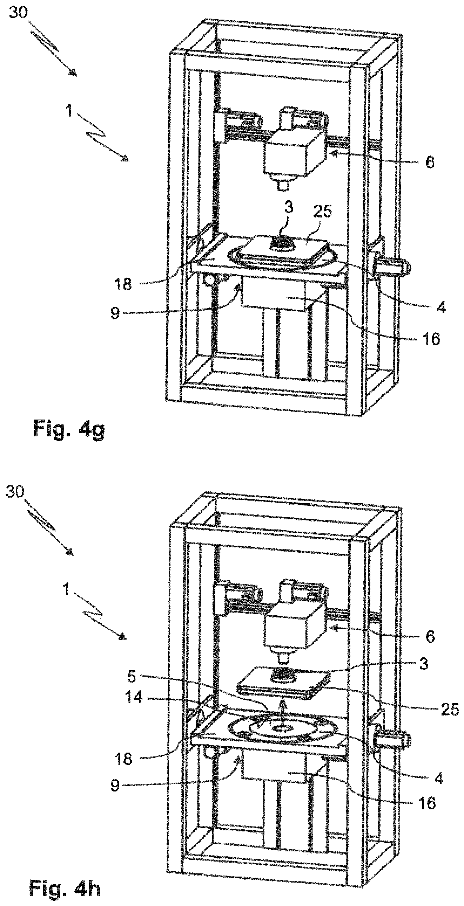

Wenn sich die Trägerstruktur 4 in der Beschickungsstellung befindet, d.h. wenn die erste Seite 9 und die verschweißten Enden 2a der Stableiter 2 nach unten weisen, wird in einem Schritt **106** ein Reinigungsvorgang durchgeführt. Hierzu wird die Reinigungsvorrichtung 16 von unten an die Schweißmaske 5 herangefahren, vgl. Figur 4g. Die Reinigungsvorrichtung 16 entfernt Verschmutzungen wie Schweißspritzer von der ersten Seite 9 der Schweißmaske 5 (in Figur 4g verdeckt) und den nun verschweißten freien Enden 2a (in Figur 4g ebenfalls verdeckt) der Stableiter 2. Beim Reinigen gelöste Schmutzpartikel fallen unter Schwerkrafteinfluss nach unten, so dass sie in der Reinigungseinrichtung 16 gesammelt werden können.

Nach Abschluss des Reinigungsvorgangs wird in einem Schritt **107** die Schweißmaske 5 geöffnet. Anschließend wird der Halter 25 mit dem Stator 3 in einem Schritt **108** von der Trägerstruktur 4 entfernt, vgl. Figur 4h, indem der Halter 25 nach oben von der Trägerstruktur 4 abgezogen wird.

Auf die oben beschriebene Weise können sodann die freien Enden der Stableiter eines weiteren Stators verschweißt werden. Die Trägerstruktur 4 kann zum Befestigen des weiteren Stators in der zuletzt eingerichteten Beschickungsstellung verbleiben. Typischerweise wird die Reinigungseinrichtung 16 vor dem Befestigen des weiteren Stators wieder nach unten von der Schwenkbrücke 18 entfernt.

### Bezugszeichenliste-.

Schweißmaschine **1**
freie Enden **2a**
Stableiter **2**
Stator **3**
Trägerstruktur **4**
Schweißmaske **5**
Schweißeinrichtung **6**
erste Seite **9**
radial äußeres Deckelement **10**
radial inneres Deckelement **11**
Finger **12**
Grundkörper **13**
zweite Seite **14**
Reinigungseinrichtung **16**
Rahmen **17**
Schwenkbrücke **18**
Schwenkachse **19**
vertikale Richtung **20**
horizontale Richtung **21**
Drehachse **22**
Vertikal-Antrieb **23**
Horizontal-Antrieb **24**
Halter **25**
zentrierendes Spannsystem **26**
vertikale Richtung **27**
Dreh-Antrieb **28**
Fertigungssystem **30**
Laserstrahl **31**
Bereitstellen **100**
Befestigen **101** des Stators 3 an der Trägerstruktur 4
Schließen **102** der Schweißmaske 5
Wenden **103** der Trägerstruktur 4 (Beschickungsstellung -> Schweißstellung)
Verschweißen **104** der freien Enden 2a
Wenden **105** der Trägerstruktur 4 (Schweißstellung -> Beschickungsstellung)
Reinigen **106**
Öffnen **107** der Schweißmaske 5
Entfernen **108** des Stators 3 von der Trägerstruktur 4

## Patentansprüche

1. Schweißmaschine (1) zum Verschweißen von freien Enden (2a) von Stableitern (2) eines Stators (3) einer elektrischen Maschine, insbesondere eines Elektromotors, aufweisend
- eine Trägerstruktur (4), zum direkten oder indirekten Befestigen des Stators (3), mit einer öffen- und schließbaren Schweißmaske (5),
- eine Schweißeinrichtung (6), insbesondere eine Laserschweißeinrichtung,
wobei die Schweißeinrichtung (6) oberhalb der Trägerstruktur (4) angeordnet ist, und
wobei die Trägerstruktur (4) zwischen einer Schweißstellung und einer Beschickungsstellung verbringbar ist, wobei eine erste Seite (9) der Schweißmaske (5) in der Schweißstellung zu der Schweißeinrichtung (6) hin ausgerichtet ist und in der Beschickungsstellung nach unten ausgerichtet ist.

2. Schweißmaschine (1) nach Anspruch 1, **dadurch gekennzeichnet, dass** die Schweißmaske (5) dazu eingerichtet ist, im geschlossenen Zustand die freien Enden (2a) der Stableiter (2) einzuklemmen.

3. Schweißmaschine (1) nach einem der vorhergehenden Ansprüche, **dadurch gekennzeichnet, dass** die Schweißmaske (5) verschiebliche Finger (12) zum Eingreifen zwischen die Stableiter (2) aufweist.

4. Schweißmaschine (1) nach einem der vorhergehenden Ansprüche, **dadurch gekennzeichnet, dass** die Schweißmaschine (1) weiterhin eine Reinigungseinrichtung (16) zum Reinigen der Schweißmaske (5), insbesondere der ersten Seite (9) der Schweißmaske (5), aufweist.

5. Schweißmaschine (1) nach Anspruch 4, **dadurch gekennzeichnet, dass** die Reinigungseinrichtung (16) unterhalb der Trägerstruktur (4) angeordnet ist.

6. Schweißmaschine (1) nach Anspruch 4 oder 5, **dadurch gekennzeichnet, dass** die Reinigungseinrichtung (16) für eine Reinigung durch Blasen, Schaben, Bürsten und/oder Strahlen, insbesondere CO₂-Schneestrahlen, eingerichtet ist.

7. Schweißmaschine (1) nach einem der vorhergehenden Ansprüche, **dadurch gekennzeichnet, dass** die Schweißmaschine (1) einen Rahmen (17), insbesondere einen rechteckförmigen Rahmen (17), aufweist, an dem die Trägerstruktur (4) über eine Schwenkbrücke (18) gelagert ist.

8. Schweißmaschine (1) nach einem der vorhergehenden Ansprüche, **dadurch gekennzeichnet, dass** die Trägerstruktur (4) um eine horizontale Schwenkachse (19) drehbar ist.

9. Schweißmaschine (1) nach Anspruch 8, **dadurch gekennzeichnet, dass** die Trägerstruktur (4) um eine senkrecht zu der Schwenkachse (19) ausgerichtete Drehachse (22) drehbar ist.

10. Schweißmaschine (1) nach einem der vorhergehenden Ansprüche, **dadurch gekennzeichnet, dass** die Schweißeinrichtung (16) in einer vertikalen Richtung (20) und wenigstens einer horizontalen Richtung (21), vorzugsweise zwei horizontalen Richtungen, gegenüber der Trägerstruktur (4) verfahrbar ist.

11. Fertigungssystem (30) aufweisend eine Schweißmaschine (1) nach einem der vorhergehenden Ansprüche und einen Halter (25), insbesondere Klemmhalter, mittels welchem der Stator (3) an der Trägerstruktur (4) befestigbar ist.

12. Fertigungssystem (30) nach Anspruch 11, **dadurch gekennzeichnet, dass** der Halter (25) über ein zentrierendes Spannsystem (26), insbesondere ein Nullpunktspannsystem, mit der Trägerstruktur (4) verbindbar ist.

13. Verfahren zum Verschweißen von freien Enden (2a) von Stableitern (2) eines Stators (3) einer elektrischen Maschine, insbesondere eines Elektromotors, mittels einer Schweißmaschine (1), die eine Trägerstruktur (4) mit einer öffen- und schließbaren Schweißmaske (5) aufweist,
mit den Schritten
a) Bereitstellen (100) des an der Trägerstruktur (4) befestigten Stators (3), wobei eine erste Seite (9) der Schweißmaske (5) und die freien Enden (2a) der Stableiter (2) nach oben weisen und wobei die Schweißmaske (5) geschlossen ist,
b) Verschweißen (104) der freien Enden (2a),
c) Wenden (105) der Trägerstruktur (4), so dass die erste Seite (9) und die Enden (2a) der Stableiter (2) nach unten weisen,
d) Öffnen (107) der Schweißmaske (5) und Entfernen (108) des Stators (3) von der Trägerstruktur (4).

14. Verfahren nach Anspruch 13, **dadurch gekennzeichnet, dass** der Schritt a) die folgenden Teilschritte umfasst:
a1) Befestigen (101) des Stators (3) an der Trägerstruktur (4), wobei die erste Seite (9) der Schweißmaske (5) und die freien Enden (2a) der Stableiter (2) nach unten weisen,
a2) Schließen (102) der Schweißmaske (5),
a3) Wenden (103) der Trägerstruktur (4), so dass die erste Seite (9) und die freien Enden (2a) der Stableiter (2) nach oben weisen.

15. Verfahren nach Anspruch 13 oder 14, mit dem weiteren Schritt e) Reinigen (106) der ersten Seite (9) der Schweißmaske (5), und vorzugsweise auch der Enden (2a) der Stableiter (2), in der in Schritt c) eingerichteten Stellung der Trägerstruktur (4) mit nach unten weisender erster Seite (9).

## Claims

1. A welding machine (1) for welding free ends (2a) of bar conductors (2) of a stator (3) of an electrical machine, in particular an electric motor, comprising:
- a support structure (4) for directly or indirectly fixing the stator (3), having a welding mask (5) which can be opened and closed;
- a welding device (6), in particular a laser welding device,
wherein the welding device (6) is arranged above the support structure (4), and
wherein the support structure (4) can be moved between a welding position and a loading position, wherein a first side (9) of the welding mask (5) is oriented towards the welding device (6) in the welding position and is oriented downward in the loading position.

2. The welding machine (1) as claimed in claim 1, **characterized in that** the welding mask (5) is configured to clamp the free ends (2a) of the bar conductors (2) in the closed state.

3. The welding machine (1) as claimed in any of the preceding claims, **characterized in that** the welding mask (5) has movable fingers (12) for engaging between the bar conductors (2).

4. The welding machine (1) as claimed in any of the preceding claims, **characterized in that** the welding machine (1) furthermore has a cleaning device (16) for cleaning the welding mask (5), in particular the first side (9) of the welding mask (5).

5. The welding machine (1) as claimed in claim 4, **characterized in that** the cleaning device (16) is arranged below the support structure (4).

6. The welding machine (1) as claimed in claim 4 or 5, **characterized in that** the cleaning device (16) is configured for cleaning by blowing, scraping, brushing and/or blasting, in particular CO₂ snow blasting.

7. The welding machine (1) as claimed in any of the preceding claims, **characterized in that** the welding machine (1) has a frame (17), in particular a rectangular frame (17), on which the support structure (4) is mounted via a swing bridge (18).

8. The welding machine (1) as claimed in any of the preceding claims, **characterized in that** the support structure (4) is rotatable about a horizontal pivot axis (19).

9. The welding machine (1) as claimed in claim 8, **characterized in that** the support structure (4) is rotatable about a rotational axis (22) oriented perpendicularly to the pivot axis (19).

10. The welding machine (1) as claimed in any of the preceding claims, **characterized in that** the welding device (16) can travel in a vertical direction (20) and at least one horizontal direction (21), preferably two horizontal directions, relative to the support structure (4).

11. A production system (30) comprising a welding machine (1) as claimed in any of the preceding claims and a holder (25), in particular a clamping holder, by means of which the stator (3) can be fixed to the support structure (4).

12. The production system (30) as claimed in claim 11, **characterized in that** the holder (25) can be connected to the support structure (4) via a centering clamping system (26), in particular a zero point clamping system.

13. A method for welding free ends (2a) of bar conductors (2) of a stator (3) of an electrical machine, in particular an electric motor, by means of a welding machine (1) having a support structure (4) with a welding mask (5) which can be opened and closed,
with the steps
a) providing (100) the stator (3) fixed to the support structure (4), wherein a first side (9) of the welding mask (5) and the free ends (2a) of the bar conductors (2) point upward, and wherein the welding mask (5) is closed,
b) welding (104) the free ends (2a),
c) turning (105) the support structure (4) so that the first side (9) and the ends (2a) of the bar conductors (2) point downward,
d) opening (107) the welding mask (5) and removing (108) the stator (3) from the support structure (4).

14. The method as claimed in claim 13, **characterized in that** step a) comprises the following part steps:
a1) fixing (101) the stator (3) to the support structure (4), wherein the first side (9) of the welding mask (5) and the free ends (2a) of the bar conductors (2) point downward,
a2) closing (102) the welding mask (5),
a3) turning (103) the support structure (4) so that the first side (9) and the free ends (2a) of the bar conductors (2) point upward.

15. The method as claimed in claim 13 or 14, with the further step e) cleaning (106) the first side (9) of the welding mask (5), and preferably also the ends (2a) of the bar conductors (2), in the position of the support structure (4) achieved in step c) with downwardly pointing first side (9).

## Revendications

1. Machine de soudage (1) conçue pour souder des extrémités libres (2a) de barres conductrices (2) d'un stator (3) d'une machine électrique, d'un moteur électrique en particulier, comprenant
- une structure de support (4), dévolue à la fixation directe ou indirecte du stator (3) et munie d'un masque de soudage (5) pouvant être ouvert et fermé,
- un dispositif de soudage (6), en particulier un dispositif de soudage au laser,
ledit dispositif de soudage (6) étant implanté au-dessus de la structure de support (4), et ladite structure de support (4) pouvant être déplacée entre une position de soudage et une position d'alimentation, et un premier côté (9) du masque de soudage (5) étant orienté vers ledit dispositif de soudage (6) dans ladite position de soudage, et orienté vers le bas dans ladite position d'alimentation.

2. Machine de soudage (1) selon la revendication 1, **caractérisée par le fait que** le masque de soudage (5) est agencé pour enserrer les extrémités libres (2a) des barres conductrices (2) à l'état fermé.

3. Machine de soudage (1) selon l'une des revendications précédentes, **caractérisée par le fait que** le masque de soudage (5) est doté de doigts coulissants (12) conçus pour s'engager entre les barres conductrices (2).

4. Machine de soudage (1) selon l'une des revendications précédentes, **caractérisée par le fait que** ladite machine de soudage (1) est pourvue, en outre, d'un dispositif de nettoyage (16) conçu pour nettoyer le masque de soudage (5), notamment le premier côté (9) dudit masque de soudage (5).

5. Machine de soudage (1) selon la revendication 4, **caractérisée par le fait que** le dispositif de nettoyage (16) est implanté au-dessous de la structure de support (4).

6. Machine de soudage (1) selon la revendication 4 ou 5, **caractérisée par le fait que** le dispositif de nettoyage (16) est conçu pour un nettoyage par soufflage, raclement, brossage et/ou projection de jets, en particulier des jets de neige carbonique.

7. Machine de soudage (1) selon l'une des revendications précédentes, **caractérisée par le fait que** ladite machine de soudage (1) est nantie d'un bâti (17), notamment d'un bâti rectangulaire (17) sur lequel la structure de support (4) est montée par l'intermédiaire d'une plate-forme pivotante (18).

8. Machine de soudage (1) selon l'une des revendications précédentes, **caractérisée par le fait que** la structure de support (4) peut tourner autour d'un axe horizontal de pivotement (19).

9. Machine de soudage (1) selon la revendication 8, **caractérisée par le fait que** la structure de support (4) peut tourner autour d'un axe de rotation (22) orienté perpendiculairement à l'axe de pivotement (19).

10. Machine de soudage (1) selon l'une des revendications précédentes, **caractérisée par le fait que** le dispositif de nettoyage (6) peut être déplacé, par rapport à la structure de support (4), dans une direction verticale (20) et dans au moins une direction horizontale (21), préférentiellement dans deux directions horizontales.

11. Système de fabrication (30) comprenant une machine de soudage (1) conforme à l'une des revendications précédentes et un élément de retenue (25), en particulier un élément de retenue par ablocage au moyen duquel le stator (3) peut être fixé à la structure de support (4).

12. Système de fabrication (30) selon la revendication 11, **caractérisé par le fait que** l'élément de retenue (25) peut être relié à la structure de support (4) par l'intermédiaire d'un système de serrage (26) à effet de centrage, notamment d'un système de serrage à point zéro.

13. Procédé de soudage d'extrémités libres (2a) de barres conductrices (2) d'un stator (3) d'une machine électrique, d'un moteur électrique en particulier, au moyen d'une machine de soudage (1) présentant une structure de support (4) munie d'un masque de soudage (5) pouvant être ouvert et fermé,
incluant les étapes consistant à
a) apprêter (100) le stator (3) fixé à la structure de support (4), un premier côté (9) du masque de soudage (5) et les extrémités libres (2a) des barres conductrices (2) pointant vers le haut, et ledit masque de soudage (5) étant fermé,
b) souder (104) lesdites extrémités libres (2a),
c) retourner (105) ladite structure de support (4), de façon telle que ledit premier côté (9) et lesdites extrémités (2a) des barres conductrices (2) pointent vers le bas,
d) ouvrir (107) le masque de soudage (5) et dissocier (108) ledit stator (3) d'avec ladite structure de support (4).

14. Procédé selon la revendication 13, **caractérisé par le fait que** l'étape a) englobe les étapes partielles suivantes :
a1) fixation (101) du stator (3) à la structure de support (4), le premier côté (9) du masque de soudage (5), et les extrémités libres (2a) des barres conductrices (2), pointant alors vers le bas,
a2) fermeture (102) dudit du masque de soudage (5),
a3) retournement (103) de ladite structure de support (4), de telle sorte que ledit premier côté (9) et lesdites extrémités libres (2a) des barres conductrices (2) pointent vers le haut.

15. Procédé selon la revendication 13 ou 14, incluant l'étape additionnelle consistant à
e) nettoyer (106) le premier côté (9) du masque de soudage (5) et, de préférence également, les extrémités (2a) des barres conductrices (2) dans la position de la structure de support (4) instaurée à l'étape c), lorsque ledit premier côté (9) pointe vers le bas.
